(19) Europäisches Patentamt
European Patent Office
Office européen des brevets

(11) **EP 4 700 212 A1**

(12) **EUROPEAN PATENT APPLICATION**

(43) Date of publication:
**25.02.2026 Bulletin 2026/09**

(21) Application number: **25197047.1**

(22) Date of filing: **20.08.2025**

(51) International Patent Classification (IPC):
**F01D 21/00** *(2006.01)* **G01N 21/954** *(2006.01)*
**F01D 1/00** *(2006.01)*

(52) Cooperative Patent Classification (CPC):
**F01D 21/003; G01N 21/954;** F01D 1/00;
F05D 2260/80; F05D 2270/804; F05D 2270/8041

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.08.2024 US 202418810173**

(71) Applicant: **RTX Corporation
Farmington, CT 06032 (US)**

(72) Inventor: **AHMADIAN, Shayan
Farmington, 06032 (US)**

(74) Representative: **Dehns
10 Old Bailey
London EC4M 7NG (GB)**

(54) **LIGHT SOURCE AND OPTICAL SENSOR PACKAGING FOR GAS TURBINES**

(57) An apparatus may include a fan case (130) and an optical pipe (102a). The fan case (130) may define a gas flow path (132). The optical pipe (102a) may have a portion extending through the fan case (130) into the gas flow path (132). The optical pipe (102a) may include a lens (104), a beam splitter (106), a light source (108), and an optical sensor (110). The lens (104) may be positioned within the fan case (130). The beam splitter (106) may be aligned with the lens (104). The light source (108) may be positioned on a first side of the beam splitter (106). The optical sensor (110) may be positioned on a second side of the beam splitter (106) in a manner that an optical axis (111) of the optical sensor (110) is colinear with an optical axis (109) of the light source (108) at the lens (104).

FIG. 1A

EP 4 700 212 A1

**Description**

TECHNICAL FIELD

This disclosure relates generally to gas turbine engines. More specifically, this disclosure relates to light source and optical sensor packaging.

BACKGROUND

On-board optical inspection methods for gas path components of jet engines are desirable for detecting damaged blades. Placing optical probes in the gas path is challenging due to limited space and a need to limit disturbances to the gas flow path.

SUMMARY

This disclosure provides a collinear light source and optical sensor packaging.

In some examples, an apparatus may include a fan case and an optical pipe. The fan case may define a gas flow path. The optical pipe may have a portion extending through the fan case into the gas flow path. The optical pipe may include a lens, a beamsplitter, a light source, and an optical sensor. The lens may be positioned within the fan case. The beam splitter may be aligned with the lens. The light source may be positioned on a first side of the beam splitter. The optical sensor may be positioned on a second side of the beam splitter in a manner that an optical axis of the optical sensor is colinear with an optical axis of the light source at the lens.

Any single one or any combination of the following features may be used with the above examples. The beam splitter may be a dichroic mirror. The light source may be positioned to project light through the beam splitter. The optical sensor may be positioned to capture an image reflected by the beam splitter. The optical pipe may further include a mirror that may be positioned between the beam splitter and the light source. The optical pipe may further include a pivot that may be configured to rotate the portion of the optical pipe extending into the gas flow path to be flush with the fan case. The optical pipe may further include a shutter for the lens.

In other examples, a gas turbine engine may include a fan case, a plurality of blades, and an optical pipe. The fan case may define a gas flow path. The optical pipe may have a portion extending through the fan case into the gas flow path. The optical pipe may include a lens, a beamsplitter, a light source, and an optical sensor. The lens may be positioned within the fan case. The beam splitter may be aligned with the lens. The light source may be positioned on a first side of the beam splitter. The optical sensor may be positioned on a second side of the beam splitter in a manner that an optical axis of the optical sensor is colinear with an optical axis of the light source at the lens.

Any single one or any combination of the following features may be used with the above examples. The beam splitter may be a dichroic mirror. The light source may be positioned to project light through the beam splitter. The optical sensor may be positioned to capture an image reflected by the beam splitter. The optical pipe may further include a mirror that may be positioned between the beam splitter and the light source. The optical pipe may further include a pivot that may be configured to rotate the portion of the optical pipe extending into the gas flow path to be flush with the fan case. The optical pipe may further include a shutter for the lens.

In still other examples, a method for an optical pipe that may include a portion extending through a fan case into a gas flow path. The method may also include positioning, in the optical pipe, a lens within the fan case. The method may further include aligning, in the optical pipe, a beam splitter with the lens. In addition, the method may include positioning, in the optical pipe, a light source on a first side of the beam splitter. The method may also include positioning, in the optical pipe, an optical sensor on a second side of the beam splitter in a manner that an optical axis of the optical sensor is colinear with an optical axis of the light source at the lens.

Any single one or any combination of the following features may be used with the above examples. The beam splitter may be a dichroic mirror. Positioning the light source may include positioning the light source to project light through the beam splitter. Positioning the optical sensor may include positioning the optical sensor to capture an image reflected by the beam splitter. The method may also include positioning, in the optical pipe, a mirror between the beam splitter and the light source. The method may further include rotating, using a pivot of the optical pipe, the portion of the optical pipe extending through the fan case so that the portion of the optical pipe extending into the gas flow path is flush with the fan case.

Other technical features may be readily apparent to one skilled in the art from the following figures, descriptions, and claims.

BRIEF DESCRIPTION OF THE DRAWINGS

For a more complete understanding of this disclosure, reference is made to the following description, taken in conjunction with the accompanying drawings, in which:

FIGURES 1A and 1B illustrate example light source and optical sensor packagings in accordance with this disclosure;
FIGURE 2 illustrates another example light source and optical sensor packaging in accordance with this disclosure;
FIGURE 3 illustrates an example light source and optical sensor packaging with a dichroic mirror in accordance with this disclosure;
FIGURE 4 illustrates an example light source and optical sensor packaging with segmented coating in accordance with this disclosure;
FIGURE 5 illustrates an example method for a collinear light source and optical sensor packaging according to this disclosure;
FIGURE 6 illustrates an example method for a collinear light source and optical sensor packaging according to this disclosure; and
FIGURE 7 illustrates an example device for a light source and optical sensor packaging in accordance with this disclosure.

DETAILED DESCRIPTION

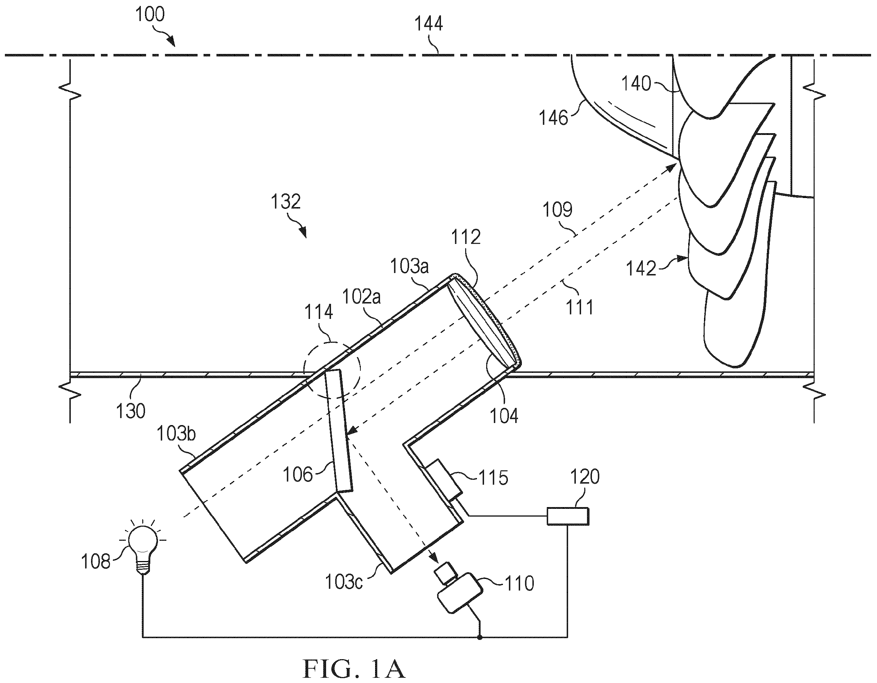

FIGURES 1A through 7, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As discussed above, detecting damage to blades is desirable for the operation of a gas turbine engine and repair planning. Debris that enters the gas flow path can cause damage to the blades and drastically affect operation of the gas turbine engine. It can be difficult when placing optical sensors and light sources in the gas path to not drastically affect the gas flow path and also to keep the light source from getting damaged. Combining the light source and optical sensor into a single unit allows for using a single hole minimizing the footprint of the combined unit into the gas flow path.

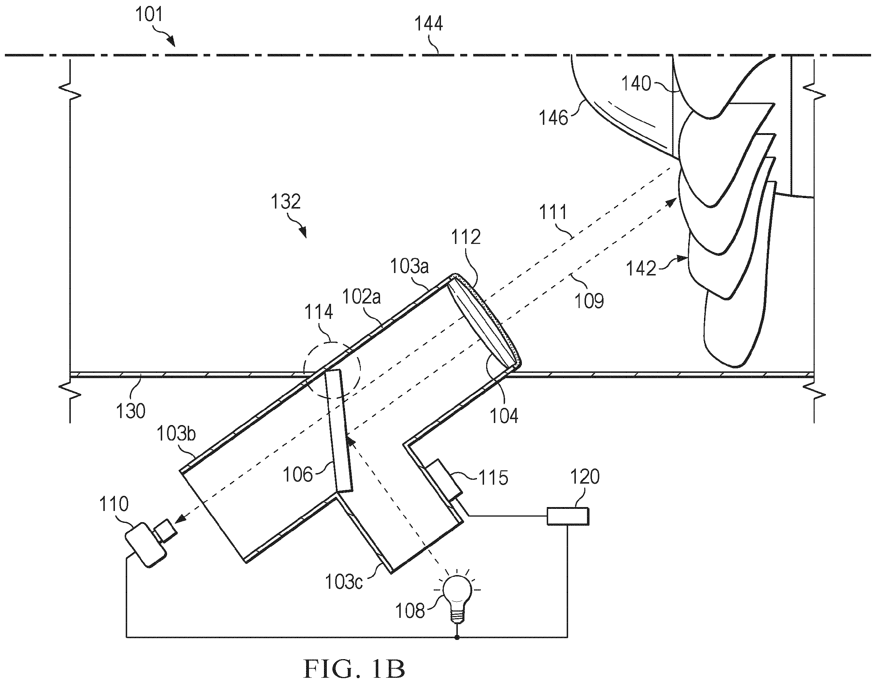

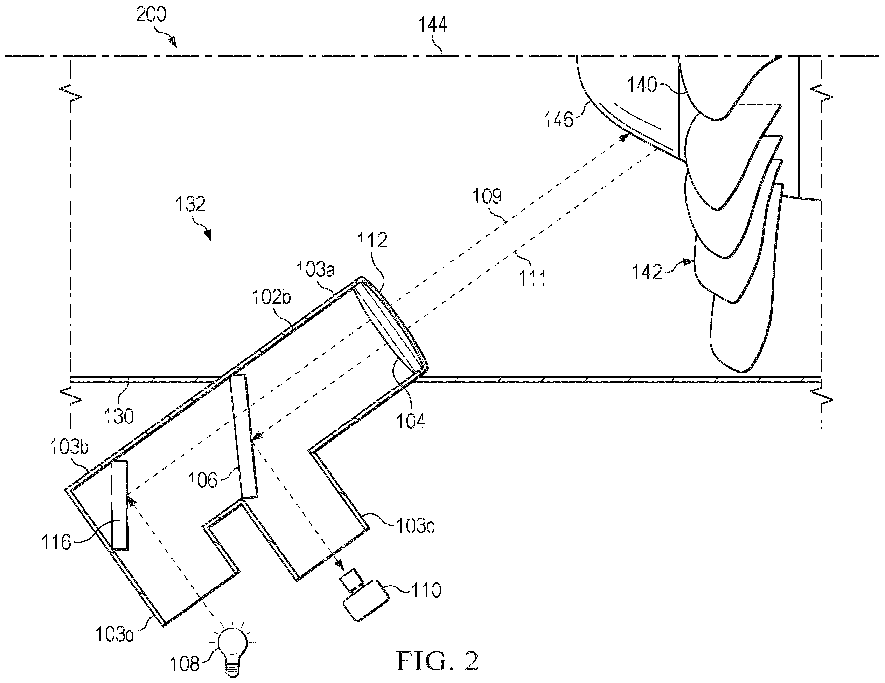

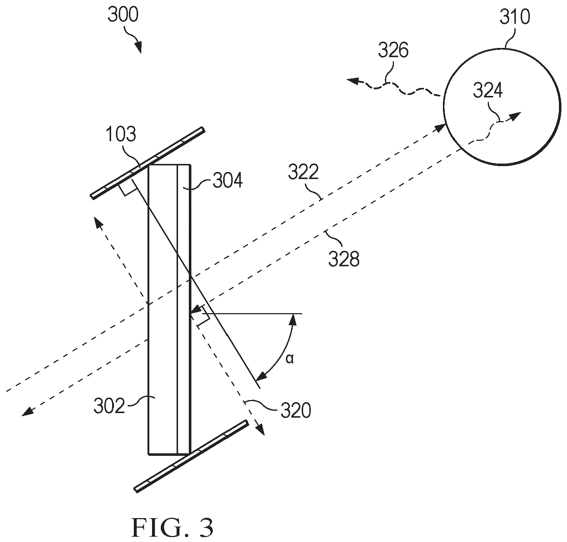

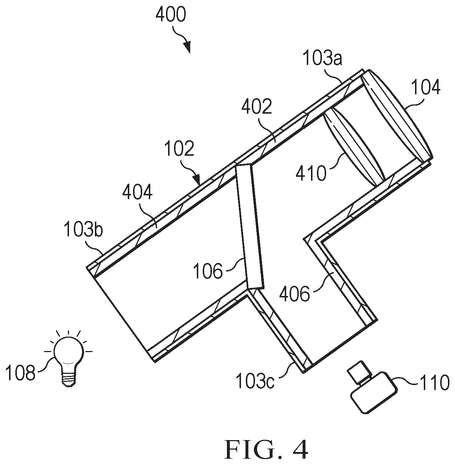

FIGURES 1A and 1B illustrate example light source and optical sensor packagings 100 and 101 in accordance with this disclosure. FIGURE 2 illustrates another example light source and optical sensor packaging 200 in accordance with this disclosure. FIGURE 3 illustrates an example light source and optical packaging 300 with a dichroic mirror in accordance with this disclosure. FIGURE 4 illustrates an example light source and optical packaging 400 with segmented coating in accordance with this disclosure.

As shown in FIGURES 1A through 4, the light source and optical sensor packaging 100, 101, 200, 300, and 400 may include an optical pipe 102a or 102b, a lens 104, a beam splitter 106, a light source 108, an optical sensor 110, a shutter 112, and a pivot 114. The light source and optical sensor packaging 200 may also include a mirror 116. Fan blades 140 of a first stage rotor 142 may experience significant foreign object damage. Rather than a person looking at every fan blade 140, technology (camera) can be used to analyze the fan blade 140. Also shown in FIGURES 1A through 4 is an engine centerline 144 and a nose cone 146.

The optical pipe 102a or 102b can be positioned to extend through the fan case 130. The fan case 130 may define a gas flow path 132 through an interior of the fan case 130. The optical pipe 102a or 102b may extend a distance into the flow path based on a bottom edge of the lens 104 being positioned within the gas flow path 132. The portion of the optical pipe 102a or 102b connected to the bottom portion of the lens 104 may be aligned with the fan case 130 in a manner that the lens 104 is fully exposed to the gas flow path 132. The lens 104 may be positioned in a first branch 103a of the optical pipe 102. The light source 108 may be positioned in a second branch 103b of the optical pipe 102a or 102b and the optical sensor 110 may be positioned in a third branch 103c of the optical pipe 102a or 102b. The first branch 103a may be parallel to the second branch 103b and may be perpendicular to the third branch 103c. The optical pipe 102a can be made of material with low thermal conductivity and high strength, such as metals and plastics.

As shown in FIGURE 2, the second branch 103b of the optical pipe 102b may include an extension branch 103d. The extension branch 103d may be angled from the second branch 103b to move the light source 108 to a different location. A mirror 116 may be placed at the bend between the second branch 103b and the extension branch 103d. The mirror 116 can reflect the light produced by the light source 108 through the extension branch 103d to the second branch 103b. Once the light has been reflected by the mirror 116 to the second branch 103b, the light passing through the beam splitter 106 may be collinear with the optical axis 111 of the optical sensor 110.

As shown in FIGURE 1A, the beam splitter 106 may be positioned in front of the second branch 103b of the optical pipe 102a or 102b in a manner to reflect light along an optical axis 111 of the optical sensor 110 and transmit light along an optical axis 109 of the light source 108. The optical axis 109 of the light source 108 may be collinear or parallel at the lens 104 to the optical axis 111 of the optical sensor 110. The light from the light source 108 may be transmitted through the beam splitter 106 and the lens 104 along the optical axis 109 towards the fan blades 140. The light may be reflected from the fan blades 140 back through the lens 104 and may be reflected on the beam splitter 106 along the optical axis 111 of the optical sensor 110. In certain embodiments, the beam splitter 106 may be a dichroic mirror. The light source 108 can operate using pulse lighting.

Different lens 104 configurations may be utilized depending on an object distance, where size and magnification can be adjusted to control the light beam expansion and focus. The lens 104 and coating material may be selected to filter for different wavelengths of light and paired with camera sensor type (visible light, IR, UV, etc.) to optimize reflected light collected from surface of the object to ideally capture an image. In some embodiments, a dirt rejection coating, such as an oleophobic coating, can be applied to the outer surface of the lens 104. The dirt rejection coating may reduce the ability of dirt and debris to cover the lens 104. The lens 104 can be made of a material, such as a polycarbonate, to withstand excessive heat and impacts. The material of the lens 104 can be determined based on an application or location of the lens 104, such as in a low pressure compressor or a high pressure compressor. The lens 104 may be arranged at an offset position from an end of the optical pipe 102a. Thus, the optical pipe 102a would provide extra protection from debris moving through the fan case 130. The lens 104 can have a shape, such as round, oblong, or elliptical, according to an application of the light source and optical sensor packaging 100.

As shown in FIGURE 1B, the light source 108 can be positioned in the third branch 103c and the optical sensor 110 can be positioned in the second branch 103b. In this arrangement, the optical axis 109 of the light source 108 is projected through the third branch 103c to the beam splitter 106 and reflected through the lens 104 towards the fan blades 140 and nose cone 146. The optical axis 111 of the optical sensor 110 can be collinear or parallel with the optical axis 109 of the light source 108 from the beam splitter 106 through the lens 104 to the objects being monitored or captured. The optical axis 111 of the optical sensor 110 would pass through the beam splitter 106.

The shutter 112 may be attached to an outer surface of the optical pipe 102a or 102b in front of the lens 104. The shutter 112 may be closed to protect the lens 104 when debris is detected in the gas flow path 132. If damage to the fan blades 140 has been detected by the optical sensor 110, the shutter 112 can be closed over the lens 104 to reduce the likelihood of damage to the lens 104. The shutter 112 can be closed to remove dust or other debris from an outer surface of the lens 104. In some embodiments, a fairing cover can be used in place of or in addition to the shutter 112.

The pivot 114 can be used to rotate the first branch 103a of the optical pipe 102a or 102b. The rotation about the pivot 114 can remove the lens 104 from the gas flow path 132. The top surface of the first branch 103a of the optical pipe 102a or 102b can be rotated about the pivot 114 to lie flush with the inner surface of the fan case 130. The pivot 114 can be used when the damage to the fan blades 140 has been detected and further scanning is not required. The pivot 114 can also be used when debris is detected in the gas flow path 132.

The light source and optical sensor packaging 100 and 101 can also include an actuator 115. The actuator 115 can be connected to the first branch 103a of the optical pipe 102a to rotate the first branch 103a about the pivot 114. The actuator 115 can rotate the first branch 103a to be out of the gas flow path 132 or in the gas flow path 132 and aligned with an object, such as fan blades 140. The actuator 115 can be controlled by a processor 120. The processor 120 can control the actuator 115 based on an operation state of a gas turbine engine.

As shown in FIGURE 3, the light source and optical packaging 300 may include a dichroic (one-way) mirror 302 as the beam splitter 106. The dichroic mirror 302 may include a reflective coating 304 to partially reflect light incoming light from a surface of the object 310 intended to be imaged toward the optical sensor 110. The reflected light in relation to provided light by the light source 108 can be determined as shown in equation 1.

$$R_{XO} = T_T - A_O - S_O - R_O * X \qquad (1)$$

Here, RXO represents an amount of light 320 reflected by a dichroic mirror 302 coming from a surface of an object 310 to be imaged, TT represents an amount of light 322 transmitted through the dichroic mirror, AO represents an amount of light 324 absorbed by the object, SO represents an amount of light 326 scattered by the object, RO represents an amount of light 328 reflected from a surface of an object, and X represents a percentage of reflectivity of the dichroic mirror 302 achieved by reflective coating 304.

Assuming a minimum amount of absorbed light 324 and scattered light 326, the total light reflected can be simplified as shown in equation 2.

$$R_O = R_{XO} + R_{TO} \qquad (2)$$

Here, $R_{TO}$ represents an amount of light transmitted through the dichroic mirror 302 back toward the light source 108. The percentage of reflectivity of the dichroic mirror 302 may be selected to adjust for preferred split between $R_{XO}$ and $R_{TO}$ with an understanding that although higher reflectivity means more light reflected toward the optical sensor 110 would also mean a larger light source 108 is needed to provide adequate light $T_T$ transmission from the light source to the object 310. The angle $\alpha$, defined as a surface normal between a wall of the optical pipe 102 and dichroic mirror 302 can be set such that it is always less than 90 degrees to redirect the light to desired positing of the optical sensor 110. Additional mirrors may be utilized to further redirect the light toward the optical sensor 110 based on desired positioning of optical sensor 110 and light source 108. For example, light source 108 can be positioned side by side of the optical sensor 110 as shown in FIGURE 2.

As shown in FIGURE 4, the light source and optical sensor packaging 400 may include different coatings 402, 404, and 406 on an interior of the optical pipe 102. The first branch 103a of the optical pipe 102, the second branch 103b of the optical pipe 102, and the third branch 103c of the optical pipe 102 can be coated with different coatings 402, 404, 406. The specific branch, such as the second branch 103b, of the optical pipe 102 with the light source 108 can have a coating 404 that is reflective for even distribution of light down stream of the beam splitter 106. The branches, such as the first branch 103a and the third branch 103c, can have coatings 402 and 406 that are non-reflective to prevent unwanted reflection at the optical sensor 110.

The light source and optical sensor packaging 400 may also include a focusing lens 410 in addition to lens 104. The focusing lens 410 can be internal to the optical pipe 102 for protection from temperature of the gas flow path 132 and debris in the gas flow path 132. The focusing lens 410 can be easily replaced.

Although FIGURES 1A through 4 illustrate example light source and optical sensor packagings 100, 101, 200, 300, and 400, various changes may be made to FIGURES 1A through 4. For example, various components in FIGURES 1A through 4 may be combined, further subdivided, replicated, omitted, or rearranged and additional components may be added according to particular needs.

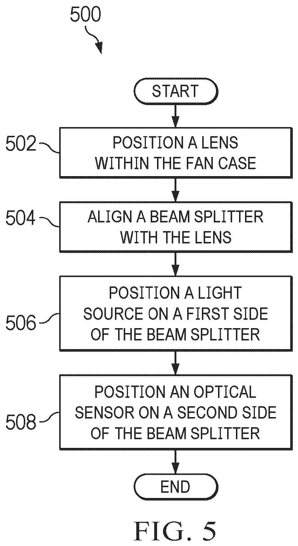

FIGURE 5 illustrates an example method 500 for a light source and optical sensor packaging according to this disclosure. For ease of explanation, the method 500 of FIGURE 5 is described as being performed using the light source and optical sensor packaging 100 of FIGURE 1. However, the method 500 may be used with any other suitable system and any other suitable engine, including an engine with light source and optical sensor packagings 101, 200, 300, and 400 shown in FIGURES 1B through 4.

As shown in FIGURE 5, a lens 104 in the optical pipe 102a can be positioned within the fan case 130 at step 502. The lens 104 can be aligned with a plurality of fan blades 140. The lens 104 can include a dirt rejection coating to reduce the buildup of dirt and other debris on an outer surface of the lens 104. A shutter 112 can be used to cover the lens 104 and clear any dirt or debris on the outer surface of the lens 104.

A beam splitter 106 in the optical pipe 102a can be aligned with the lens 104 at step 504. The beam splitter 106 can be a dichroic mirror. The beam splitter 106 can be located between a second branch 103b and one or more of the first branch 103a and the third branch 103c of the optical pipe 102a.

A light source 108 in the optical pipe 102a can be positioned on a first side of the beam splitter 106 at step 506. The light source 108 in the optical pipe 102a can be positioned to project light through the beam splitter 106. A mirror 116 can be positioned between the beam splitter 106 and the light source 108.

An optical sensor 110 in the optical pipe 102a can be positioned on a second side of the beam splitter 106 at step 508. The optical sensor 110 can be positioned to capture an image reflected by the beam splitter 106. The image projected on to the optical sensor 110 can be larger or smaller than the size of the sensor itself based on a design of the lens 104 and the optical sensor 110.

Although FIGURE 5 illustrates one example of an example method 500 for a light source and optical sensor packaging, various changes may be made to FIGURE 5. For example, while shown as a series of steps, various steps in FIGURE 5 may overlap, occur in parallel, or occur any number of times.

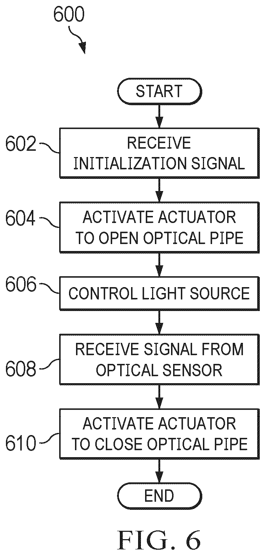

FIGURE 6 illustrates an example method 600 for a light source and optical sensor packaging according to this disclosure. For ease of explanation, the method 600 of FIGURE 6 is described as being performed using the light source and optical sensor packaging 100 of FIGURE 1. However, the method 600 may be used with any other suitable system and any other suitable engine, including an engine with light source and optical sensor packagings 101, 200, 300, and 400 shown in FIGURES 1B through 4.

As shown in FIGURE 6, the processor 120 can detect a signal for monitoring an object, such as fan blades 140, in a gas flow path 132 in step 602. The signal can be an initiation of an object, such as starting rotation of fan blades 140. The signal can also be a user signal for capturing an image of the object during use of the object or when the object is not being utilized.

The processor 120 can activate an actuator 115 for controlling a first branch 103a of an optical pipe 102 in step 604. The actuator 115 can rotate the first branch 103a of the optical pipe 102 about a pivot 114. The first branch 103a moves from a closed position where the optical pipe 102 is moved out of a gas flow path 132 to an opened position where the first branch 103a of the optical pipe 102 is rotated into the gas flow path 132. In the opened position, a lens 104 of the optical pipe is aligned at the object 310 and exposed to the gas flow path 132. In the closed position, the lens 104 of the optical pipe 102 is at least partially moved out of the gas flow path 132.

The processor 120 can control the light source 108 to project light through the optical pipe 102 in step 606. The light passes through the lens 104 to an object and reflects back through the lens 104. The processor 120 receives a signal from the optical sensor 110 capturing the reflected light at step 608.

The processor 120 can activate the actuator 115 to close the optical pipe 102 in step 610. The optical pipe 102 can be closed after damage is detected in the captured image. The optical pipe 102 can be closed after operations of the object 310 have been completed. The optical pipe 102 can be closed after a specified amount of captures have been completed, such as a hundred captures. The optical pipe 102 can be closed based on an amount of time, such as a minute. The optical pipe 102 can be alternately opened and closed at different time periods during operation of the object 310. The optical pipe 102 can be alternately opened for an amount of captures, such as ten captures, and closed for a period of time, such as a minute.

Although FIGURE 6 illustrates one example of an example method 600 for a light source and optical sensor packaging, various changes may be made to FIGURE 6. For example, while shown as a series of steps, various steps in FIGURE 6 may overlap, occur in parallel, or occur any number of times.

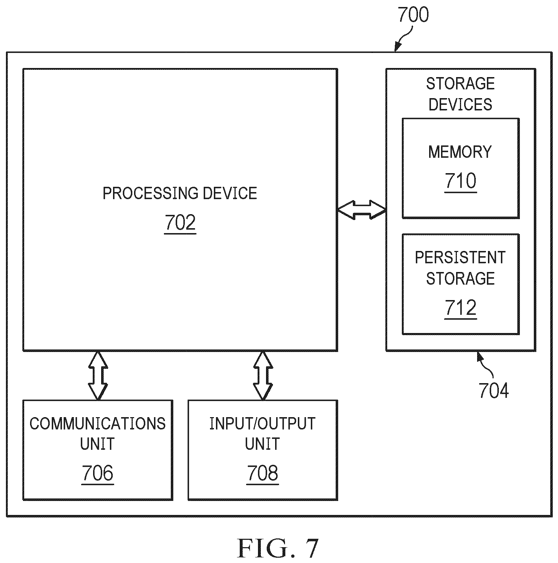

FIGURE 7 illustrates an example device 700 for a light source and optical sensor packaging according to this disclosure. One or more instances of the device 700 (or portions thereof) may, for example, be used to at least partially implement the functionality of the light source and optical sensor packaging 100 and 101 of FIGURES 1A and 1B. However, the functionality of the light source and optical sensor packagings 100 and 101 may be implemented in any other suitable manner.

As shown in FIGURE 7, the device 700 denotes a computing device or system that includes at least one processing device 702, at least one storage device 704, at least one communications unit 706, and at least one input/output (I/O) unit 708. The processing device 702 may execute instructions that can be loaded into a memory 710. The processing device 702 includes any suitable number(s) and type(s) of processors or other devices in any suitable arrangement. Example types of processing devices 702 include one or more microprocessors, microcontrollers, DSPs, ASICs, GPUs, FPGAs, or discrete circuitry. The processor 120 shown in FIGURES 1A and 1B can be the processing device 702.

The memory 710 and a persistent storage 712 are examples of storage devices 704, which represent any structure(s) capable of storing and facilitating retrieval of information (such as data, program code, and/or other suitable information on a temporary or permanent basis). The memory 710 may represent a random access memory or any other suitable volatile or non-volatile storage device(s). The persistent storage 712 may contain one or more components or devices supporting longer-term storage of data, such as a read only memory, hard drive, Flash memory, or optical disc.

The communications unit 706 supports communications with other systems or devices. For example, the communications unit 706 can include a network interface card or a wireless transceiver facilitating communications over a wired or wireless network. The communications unit 706 may support communications through any suitable physical or wireless communication link(s).

The I/O unit 708 allows for input and output of data. For example, the I/O unit 708 may provide a connection for user input through a keyboard, mouse, keypad, touchscreen, or other suitable input device. The I/O unit 708 may also send output to a display or other suitable output device. Note, however, that the I/O unit 708 may be omitted if the device 700 does not require local I/O, such as when the device 700 can be accessed remotely or operated autonomously.

In some embodiments, the instructions executed by the processing device 702 can include instructions that implement all or portions of the functionality of the light source and optical sensor packagings 100 and 101 described above. For example, the instructions executed by the processing device 702 can include instructions for a light source and optical sensor packaging as described above.

Although FIGURE 7 illustrates one example of a device 700 for a light source and optical sensor packaging, various changes may be made to FIGURE 7. For example, computing devices and systems come in a wide variety of configurations, and FIGURE 7 does not limit this disclosure to any particular computing device or system.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "include" and "comprise", as well as derivatives thereof, mean inclusion without limitation. The term "or" is inclusive, meaning and/or. The phrase "associated with", as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of" when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. An apparatus comprising:

   a fan case (130) defining a gas flow path (132); and
   an optical pipe (102a; 102b) comprising a portion extending through the fan case (130) into the gas flow path (132), the optical pipe (102a; 102b) including:

      a lens (104) positioned within the fan case (130);
      a beam splitter (106) aligned with the lens (104);
      a light source (108) positioned on a first side of the beam splitter (106); and
      an optical sensor (110) positioned on a second side of the beam splitter (106) in a manner that an optical axis (111) of the optical sensor (110) is colinear with an optical axis (109) of the light source (108) at the lens (104).

2. The apparatus of claim 1, wherein the beam splitter (106) is a dichroic mirror (302).

3. The apparatus of claim 1 or 2, wherein the light source (108) is positioned to project light through the beam splitter (106).

4. The apparatus of claim 1, 2 or 3, wherein the optical sensor (110) is positioned to capture an image reflected by the beam splitter (106).

5. The apparatus of any preceding claim, wherein the optical pipe (102a; 102b) further comprises a mirror (116) positioned between the beam splitter (106) and the light source (108).

6. The apparatus of any preceding claim, wherein the optical pipe (102a; 102b) further comprises a pivot (114) configured to rotate the portion of the optical pipe (102a; 102b) extending into the gas flow path (132) to be flush with the fan case (130).

7. The apparatus of any preceding claim, wherein the optical pipe (102a; 102b) further comprises a shutter (112) for the lens (104).

8. A gas turbine engine comprising:

   a plurality of blades; and
   the apparatus of any preceding claim.

9. A method for an optical pipe (102a; 102b) comprising a portion extending through a fan case (130) into a gas flow path (132), the method comprising:

positioning, in the optical pipe (102a; 102b), a lens (104) within the fan case (130);

aligning, in the optical pipe (102a; 102b), a beam splitter (106) with the lens (104);

positioning, in the optical pipe (102a; 102b), a light source (108) on a first side of the beam splitter (106); and

positioning, in the optical pipe (102a; 102b), an optical sensor (110) on a second side of the beam splitter (106) in a manner that an optical axis (111) of the optical sensor (110) is colinear with an optical axis (109) of the light source (108) at the lens (104).

10. The method of claim 9, wherein the beam splitter (106) is a dichroic mirror (302).

11. The method of claim 9 or 10, wherein positioning the light source (108) comprises positioning the light source (108) to project light through the beam splitter (106).

12. The method of claim 9, 10 or 11, wherein positioning the optical sensor (110) comprises positioning the optical sensor (110) to capture an image reflected by the beam splitter (106).

13. The method of claim 9, 10, 11 or 12, further comprising:

positioning, in the optical pipe (102a; 102b), a mirror (116) between the beam splitter (106) and the light source (108).

14. The method of any of claims 9 to 13, further comprising:

rotating, using a pivot (114) of the optical pipe (102a; 102b), the portion of the optical pipe (102a; 102b) extending through the fan case (130) so that the portion of the optical pipe (102a; 102b) extending into the gas flow path (132) is flush with the fan case (130).

FIG. 1A

FIG. 1B

FIG. 2

FIG. 3

FIG. 4

500

START

502 — POSITION A LENS
WITHIN THE FAN CASE

504 — ALIGN A BEAM SPLITTER
WITH THE LENS

506 — POSITION A LIGHT
SOURCE ON A FIRST SIDE
OF THE BEAM SPLITTER

508 — POSITION AN OPTICAL
SENSOR ON A SECOND SIDE
OF THE BEAM SPLITTER

END

FIG. 5

600

```
        ┌─────────┐
        │  START  │
        └────┬────┘
             ▼
602 ──  ┌──────────────────────┐
        │      RECEIVE         │
        │ INITIALIZATION SIGNAL │
        └──────────┬───────────┘
                   ▼
604 ──  ┌──────────────────────┐
        │  ACTIVATE ACTUATOR   │
        │  TO OPEN OPTICAL PIPE │
        └──────────┬───────────┘
                   ▼
606 ──  ┌──────────────────────┐
        │ CONTROL LIGHT SOURCE │
        └──────────┬───────────┘
                   ▼
608 ──  ┌──────────────────────┐
        │  RECEIVE SIGNAL FROM │
        │    OPTICAL SENSOR    │
        └──────────┬───────────┘
                   ▼
610 ──  ┌──────────────────────┐
        │  ACTIVATE ACTUATOR   │
        │ TO CLOSE OPTICAL PIPE │
        └──────────┬───────────┘
                   ▼
              ┌─────────┐
              │   END   │
              └─────────┘
```

FIG. 6

700

STORAGE
DEVICES

MEMORY
710

PERSISTENT
STORAGE
712

PROCESSING DEVICE
702

704

COMMUNICATIONS
UNIT
706

INPUT/OUTPUT
UNIT
708

FIG. 7

Europäisches
Patentamt

European
Patent Office

Office européen
des brevets

## EUROPEAN SEARCH REPORT

**Application Number**

EP 25 19 7047

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/090582 A1 (BOYD LEWIS J [GB] ET AL) 24 March 2022 (2022-03-24) | 1,3-9, 11-14 | INV.<br>F01D21/00<br>G01N21/954 |
| Y | * paragraphs [0039], [0040]; figures 1 - 4 * | 2,10 | |
| | ----- | | ADD.<br>F01D1/00 |
| Y | CA 3 006 129 A1 (GEN ELECTRIC [US]) 6 December 2018 (2018-12-06) * paragraph [0041] * | 2,10 | |
| | ----- | | |
| A | EP 4 321 735 A1 (RTX CORP [US]) 14 February 2024 (2024-02-14) * figure 2 * | 1-14 | |
| | ----- | | |

**TECHNICAL FIELDS SEARCHED (IPC)**

F01D
G01N

The present search report has been drawn up for all claims

| Place of search | Date of completion of the search | Examiner |
|---|---|---|
| Munich | 8 December 2025 | Klados, Iason |

EPO FORM 1503 03.82 (P04C01)

## ANNEX TO THE EUROPEAN SEARCH REPORT
## ON EUROPEAN PATENT APPLICATION NO.

EP 25 19 7047

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | Publication date | Patent family member(s) | Publication date |
|---|---|---|---|
| US 2022090582 A1 | 24-03-2022 | NONE | |
| CA 3006129 A1 | 06-12-2018 | CA 3006129 A1<br>CN 109238729 A<br>EP 3413115 A2<br>SG 10201804292V A<br>US 2018348070 A1 | 06-12-2018<br>18-01-2019<br>12-12-2018<br>30-01-2019<br>06-12-2018 |
| EP 4321735 A1 | 14-02-2024 | EP 4321735 A1<br>US 2024052757 A1 | 14-02-2024<br>15-02-2024 |

EPO FORM P0459

For more details about this annex : see Official Journal of the European Patent Office, No. 12/82